# EUROPEAN PATENT APPLICATION

(11) **EP 4 807 228 A1**
(43) Date of publication of application: **16.09.2026**
(21) Application number: 24912183.1
(22) Date of filing: 28.11.2024
(51) Int. Cl.: F16L 1/00, F16L 1/09, F16L 1/10, F16L 21/00

(54) **PIPE JOINING DEVICE AND PIPE JOINING METHOD**

(30) Priority: 27.12.2023 JP 2023221991
(71) Applicant: KUBOTA CORPORATION, Osaka-shi, Osaka 530-0011 (JP)
(72) Inventor: FUKUZAKI, Toshiya, Amagasaki-shi, Hyogo 660-0095 (JP); ITO, Kazuya, Amagasaki-shi, Hyogo 660-0095 (JP); KOMARU, Yuito, Amagasaki-shi, Hyogo 660-0095 (JP); TANAKA, Ryunosuke, Amagasaki-shi, Hyogo 660-0095 (JP); OZAKI, Ryota, Amagasaki-shi, Hyogo 660-0095 (JP); ODA, Keita, Amagasaki-shi, Hyogo 660-0095 (JP)
(74) Representative: Müller-Boré & Partner Patentanwälte PartG mbB
(86) International application number: PCT/JP2024/042094
(87) International publication number: WO 2025/142293

(57) **Abstract**

In a pipe joining device for joining a spigot of a pipe to a socket of a joint-target pipe to be joined to the pipe, a lightweight and compact configuration is achieved. A pipe joining device 1 joins a spigot W1a of a pipe W1 to a socket W2a of a joint-target pipe W2 to be joined to the pipe W1. The pipe joining device 1 includes a joint-target pipe attachment part 10 to be attached to the socket W2a side of the joint-target pipe W2, pipe grasping parts 31 and 32 that grasp the spigot W1a side of the pipe W1, and a movement part 36 that moves at least one of the joint-target pipe attachment part 10 and the pipe grasping parts 31 and 32 in an axial direction so as to join the spigot W1a of the pipe W1 and the socket W2a of the joint-target pipe W2 to each other in the axial direction.

## Description

### TECHNICAL FIELD

The present disclosure relates to a pipe joining device and a method for joining pipes, for joining a spigot of a pipe to a socket of a joint-target pipe to be joined to the pipe.

### BACKGROUND ART

In laying ductile cast-iron pipes (an example of water pipes) each having a spigot and a socket, pipe joining work of joining a pipe to a joint-target pipe disposed in a trench in the ground is performed. In this pipe joining work, a worker is required to first suspend and bring down the pipe to be joined to the joint-target pipe into the trench. Thereafter, the worker is required to align the centers of the pipe and the joint-target pipe in the trench and insert the spigot of the pipe into the socket of the joint-target pipe to join the spigot and the socket to each other.

In such conventional pipe joining work, the worker is required to suspend and bring the pipe down into the trench while confirming the position of the pipe relative to the joint-target pipe in the trench. In addition, the worker is required to manually align the centers of the pipe and the joint-target pipe in the trench.

As described above, the conventional pipe joining work puts a large work burden on the worker and requires the work to be performed in a narrow trench, and thus the workability is not very good.

On the other hand, Patent Literature 1, for example, discloses a pipe-joining attachment for a work machine, including a grasping part that grasps a pipe and a joint-target pipe contact part that is located, relative to the grasping part, in the axial direction of a spigot of the pipe to be grasped by the grasping part and comes into contact with the outer circumferential surface on a socket side of the joint-target pipe to be joined to the pipe. By using this pipe-joining attachment, the pipe can be grasped and the spigot of the pipe can be inserted into the socket of the joint-target pipe. The pipe-joining attachment is attached to an arm of the work machine.

### CITATION LIST

### PATENT LITERATURE

Patent Literature 1: Japanese Laid-Open Patent Publication No. 2023-62320

### SUMMARY OF INVENTION

### TECHNICAL PROBLEM

Meanwhile, the pipe-joining attachment disclosed in Patent Literature 1 inserts the spigot of the pipe into the socket of the joint-target pipe while grasping the pipe. Accordingly, the pipe-joining attachment described above has a complex configuration, and is large and heavy. Therefore, the work machine to which the pipe-joining attachment that grasps the pipe is attached also becomes larger. Thus, at a narrow construction site and the like, there is a possibility that the pipe-joining attachment described above cannot be used for the pipe joining work.

To solve this, there is a need for a lightweight and compact pipe joining device that allows pipes to be joined to each other without requiring a worker to work in a trench and can be used in a narrow construction site and the like.

It is an object of the present disclosure to achieve a lightweight and compact configuration in a pipe joining device for joining a spigot of a pipe to a socket of a joint-target pipe to be joined to the pipe.

### SOLUTION TO PROBLEM

A pipe joining device according to one embodiment of the present disclosure is a pipe joining device for joining a spigot of a pipe to a socket of a joint-target pipe to be joined to the pipe. The pipe joining device includes a joint-target pipe attachment part to be attached to a socket side of the joint-target pipe, pipe grasping parts configured to grasp a spigot side of the pipe, and a movement part configured to move at least one of the joint-target pipe attachment part and the pipe grasping parts in an axial direction so as to join the spigot of the pipe and the socket of the joint-target pipe to each other in the axial direction (first configuration).

In the configuration described above, at least one of the joint-target pipe attachment part attached to the joint-target pipe and the pipe grasping parts configured to grasp the pipe is moved by the movement part in the axial direction, so that the spigot of the pipe and the socket of the joint-target pipe are joined to each other in the axial direction. Therefore, using the pipe joining device, the spigot of the pipe and the socket of the joint-target pipe can be easily joined to each other.

The pipe joining device having the above configuration is not a device attached to the tip end of an arm of a work machine as in the conventional case, but a device that allows the pipe and the joint-target pipe to be joined to each other with being disposed in a trench. Therefore, there is no need to grasp the pipe by the work machine via an attachment in joining the pipe and the joint-target pipe to each other. Therefore, the pipe joining device can be formed into a lightweight and compact configuration.

Therefore, it is possible to achieve the lightweight and compact pipe joining device that allows pipes to be joined to each other without requiring a worker to work in a trench and can be used in a narrow construction site and the like.

In the first configuration, the pipe joining device further includes a pipe holder that is coupled to the joint-target pipe attachment part and is configured to hold the spigot side of the pipe with an axis of the spigot of the pipe being positionally adjusted relative to an axis of the socket of the joint-target pipe so as to allow the spigot of the pipe and the socket of the joint-target pipe to be joined to each other (second configuration).

The pipe holder configured to hold the spigot side of the pipe is coupled to the joint-target pipe attachment part to be attached to the socket side of the joint-target pipe. Therefore, the axis of the spigot of the pipe held by the pipe holder can be positionally adjusted more reliably and easily to the axis of the socket of the joint-target pipe. This eliminates the need of the work of aligning the axis of the spigot of the pipe with the axis of the socket of the joint-target pipe in joining the spigot of the pipe and the socket of the joint-target pipe to each other. As a result, it is possible to efficiently perform the joining work between the spigot of the pipe and the socket of the joint-target pipe.

In the second configuration, the joint-target pipe attachment part includes a pair of attachment members configured to sandwich the joint-target pipe. The pipe holder includes a pair of holding members configured to sandwich the pipe. One of the pair of attachment members is coupled to one of the pair of holding members. Another one of the pair of attachment members is coupled to another one of the pair of holding members. The pair of attachment members and the pair of holding members are configured to be switchable between a closed state in which the pair of attachment members sandwiches the joint-target pipe and the pair of holding members sandwiches the pipe and an open state in which the pair of attachment members is away from the joint-target pipe and the pair of holding members is away from the pipe (third configuration).

In the above configuration, the pair of attachment members of the joint-target pipe attachment part and the pair of holding members of the pipe holder are respectively coupled to each other. Therefore, by switching the pair of attachment members and the pair of holding members between the closed state in which the pair of attachment members sandwiches the joint-target pipe and the pair of holding members sandwiches the pipe and the open state in which the pair of attachment members is away from the joint-target pipe and the pair of holding members is away from the pipe, the joint-target pipe attachment part can be attached to the joint-target pipe and the pipe holder can be attached to the pipe. As a result, the joint-target pipe attachment part can be easily attached to the joint-target pipe and the pipe holder can be easily attached to the pipe. Therefore, it is possible to efficiently perform the joining work between the spigot of the pipe and the socket of the joint-target pipe.

In the first configuration, the movement part moves the pipe grasping parts so as to draw the pipe grasping parts closer to the joint-target pipe attachment part in the axial direction (fourth configuration).

As a result, the spigot of the pipe grasped by the pipe grasping parts is moved to the socket of the joint-target pipe to which the joint-target pipe attachment part is attached, to allow the spigot to be joined to the socket. Therefore, it is possible to easily join the spigot of the pipe to the socket of the joint-target pipe installed in a trench.

In the fourth configuration, the pipe grasping parts each have a thickness equal to or smaller than a protruding height of a spigot protrusion located at a spigot tip end of the pipe, come into close contact with an outer circumferential surface of the pipe on the spigot side, and engage with the spigot protrusion (fifth configuration).

As a result, the spigot protrusion of the pipe is pushed in the axial direction by the pipe grasping parts to move the spigot of the pipe toward the socket of the joint-target pipe. Moreover, by making the thickness of the pipe grasping parts equal to or smaller than the protruding height of the spigot protrusion, it is possible to prevent the pipe grasping parts from interfering with the socket of the joint-target pipe when the spigot of the pipe is inserted into the socket of the joint-target pipe. Therefore, it is possible to efficiently perform the joining work between the spigot of the pipe and the socket of the joint-target pipe.

In the first configuration, the pipe joining device further includes a lubricant supplier configured to supply lubricant to an inner circumferential surface of a seal member attached onto an inner circumferential surface of the socket of the joint-target pipe (sixth configuration).

Before joining the spigot of the pipe to the socket of the joint-target pipe, lubricant can be supplied, by the lubricant supplier, to the inner circumferential surface of the seal member attached onto the inner circumferential surface of the socket of the joint-target pipe. Therefore, the worker is not required to enter a trench for applying the lubricant to the inner circumferential surface of the seal member. Therefore, it is possible to efficiently perform the joining work between the spigot of the pipe and the socket of the joint-target pipe.

In the sixth configuration, the lubricant supplier includes a reservoir in which lubricant is reserved, and a supply piping part whose tip end portion is insertable into a hole for supplying lubricant formed in a socket cover configured to cover an opening of the socket of the joint-target pipe and that allows the lubricant to be supplied from the reservoir into the hole (seventh configuration).

With this configuration, it is possible to achieve a configuration of the lubricant supplier configured to supply lubricant to the inner circumferential surface of the seal member attached onto the inner circumferential surface of the socket of the joint-target pipe. Moreover, lubricant can be supplied to the inner circumferential surface of the seal member by utilizing the socket cover configured to cover the opening of the socket of the joint-target pipe. Therefore, it is possible to efficiently perform the joining work between the spigot of the pipe and the socket of the joint-target pipe.

In the seventh configuration, the lubricant supplier further includes a support member configured to support the supply piping part so as to allow rotation about a base end portion of the supply piping part. The supply piping part is configured to rotate about the base end portion with the tip end portion being inserted into the hole of the socket cover to allow the socket cover to be removed from the socket of the joint-target pipe (eighth configuration).

With this configuration, the socket cover can be removed from the socket by utilizing the supply piping part of the lubricant supplier configured to supply lubricant to the inner circumferential surface of the seal member attached onto the inner circumferential surface of the socket of the joint-target pipe. Therefore, it is possible to efficiently perform the joining work between the spigot of the pipe and the socket of the joint-target pipe.

In the first configuration, the pipe joining device further includes a socket cover remover configured to remove a socket cover configured to cover an opening of the socket from the socket of the joint-target pipe (ninth configuration). With this configuration, it is possible to easily remove the socket cover configured to cover the opening of the socket of the joint-target pipe from the socket.

A method for joining pipes according to one embodiment of the present disclosure is a method for joining pipes for joining a spigot of a pipe to a socket of a joint-target pipe to be joined to the pipe. The method for joining pipes includes a joint-target pipe attaching step of attaching a joint-target pipe attachment part to a socket side of the joint-target pipe, a pipe grasping step of grasping, by pipe grasping parts, a spigot side of the pipe, and a moving step of moving, by a movement part, at least one of the joint-target pipe attachment part and the pipe grasping parts in an axial direction so as to join the spigot of the pipe and the socket of the joint-target pipe to each other in the axial direction (first method).

In the method described above, at least one of the joint-target pipe attachment part attached to the joint-target pipe and the pipe grasping parts configured to grasp the pipe is moved by the movement part in the axial direction, so that the spigot of the pipe and the socket of the joint-target pipe are joined to each other in the axial direction. Therefore, using the pipe joining device, the spigot of the pipe and the socket of the joint-target pipe can be easily joined to each other.

The device that can achieve the above-described method is not a device attached to the tip end of an arm of a work machine as in the conventional case, but a device that allows the pipe and the joint-target pipe to be joined to each other with being disposed in a trench. Therefore, there is no need to grasp the pipe by the work machine via an attachment. Thus, it is possible to achieve the device that can achieve the method described above with a lightweight and compact configuration.

Therefore, it is possible to achieve a joining method that enables joining of pipes using the lightweight and compact pipe joining device that can be used even in a narrow construction site and the like without requiring a worker to work in a trench.

In the first method, the method for joining pipes further includes a pipe holding step of holding, by a pipe holder, the spigot side of the pipe with an axis of the spigot of the pipe being positionally adjusted relative to an axis of the socket of the joint-target pipe. In the moving step, at least one of the joint-target pipe attachment part and the pipe grasping parts is moved in the axial direction by the movement part with the spigot side of the pipe being held in the pipe holding step (second method).

As a result, the spigot of the pipe can be joined to the socket of the joint-target pipe with the axis of the spigot of the pipe being positionally adjusted relative to the axis of the socket of the joint-target pipe. Therefore, the spigot of the pipe and the socket of the joint-target pipe can be easily joined to each other with being aligned with each other. Therefore, it is possible to efficiently perform the joining work between the spigot of the pipe and the socket of the joint-target pipe.

In the second method, in the pipe holding step, the pipe is supported by a support whose height is adjustable, and then the height of the support is lowered to hold the spigot side of the pipe by the pipe holder (third method).

By lowering the height of the support configured to support the pipe as described above, the spigot side of the pipe can be easily held by the pipe holder. Therefore, with a simple configuration, the axis of the spigot of the pipe and the axis of the socket of the joint-target pipe can be positionally adjusted relative to each other.

In the first method, the method for joining pipes further includes a socket cover removing step of removing a cover configured to cover an opening of the socket of the joint-target pipe (fourth method). With this step, it is possible to easily remove the socket cover configured to cover the opening of the socket of the joint-target pipe from the socket.

In the fourth method, the method for joining pipes further includes a lubricant supplying step of inserting, before moving at least one of the joint-target pipe attachment part and the pipe grasping parts in the axial direction in the moving step, a tip end portion of a supply piping part into a hole for supplying lubricant formed in the socket cover to supply, from a reservoir reserving the lubricant, the lubricant via the supply piping part to an inner circumferential surface of a seal member attached onto an inner circumferential surface of the socket of the joint-target pipe. In the socket cover removing step, the supply piping part is used to remove the socket cover (fifth method).

As a result, it is possible to supply lubricant from the supply piping part via the hole for supplying lubricant formed in the socket cover configured to cover the opening of the socket of the joint-target pipe to the inner circumferential surface of the seal member attached onto the inner circumferential surface of the socket of the joint-target pipe. Therefore, it is possible to efficiently perform the joining work between the spigot of the pipe and the socket of the joint-target pipe.

Moreover, the socket cover can be removed from the socket by utilizing the supply piping part of the lubricant supplier configured to supply lubricant to the inner circumferential surface of the seal member. Therefore, it is possible to efficiently perform the joining work between the spigot of the pipe and the socket of the joint-target pipe.

In the first method, the joint-target pipe attachment part, the pipe grasping parts, and the movement part are included in one pipe joining device. In the pipe grasping step, a grasping device attached to a tip end of an arm of a work machine carries the pipe joining device to the joint-target pipe while grasping the pipe joining device to attach the joint-target pipe attachment part to the joint-target pipe (sixth method).

As a result, the joint-target pipe attachment part can be easily attached to the joint-target pipe using the work machine. Therefore, it is possible to efficiently perform the joining work between the spigot of the pipe and the socket of the joint-target pipe.

### ADVANTAGEOUS EFFECTS OF INVENTION

A pipe joining device according to one embodiment of the present disclosure includes a joint-target pipe attachment part to be attached to a socket side of the joint-target pipe; pipe grasping parts configured to grasp a spigot side of the pipe; and a movement part configured to move at least one of the joint-target pipe attachment part and the pipe grasping parts in an axial direction so as to join the spigot of the pipe and the socket of the joint-target pipe to each other in the axial direction.

The pipe joining device having the above configuration eliminates the need to grasp the pipe by the work machine via an attachment. Therefore, it is possible to achieve the lightweight and compact pipe joining device that allows pipes to be joined to each other without requiring a worker to work in a trench and can be used in a narrow construction site and the like.

### BRIEF DESCRIPTION OF DRAWINGS

[FIG. 1] FIG. 1 is a side view showing a schematic configuration of a pipe joining device according to an embodiment;
[FIG. 2] FIG. 2 is a top view showing the schematic configuration of the pipe joining device;
[FIG. 3] FIG. 3 is a diagram of the pipe joining device viewed in an axial direction from a joint-target pipe side;
[FIG. 4] FIG. 4 is a diagram of a pipe holder of the pipe joining device viewed in the axial direction from a pipe side;
[FIG. 5] FIG. 5 is a diagram schematically showing how a lubricant supplier supplies lubricant to an inner circumferential surface of a rubber seal;
[FIG. 6] FIG. 6 is a flowchart showing a method for joining pipes using the pipe joining device;
[FIG. 7] FIG. 7 is a diagram corresponding to FIG. 3 in a case where a pair of attachment members in a joint-target pipe attachment part is in an open state;
[FIG. 8] FIG. 8 shows how the pipe joining device is grasped by a grasping device attached to a tip end of an arm of a work machine and carried to the joint-target pipe in a trench;
[FIG. 9] FIG. 9 is a side view showing a state where the joint-target pipe attachment part of the pipe joining device is disposed onto the joint-target pipe;
[FIG. 10] FIG. 10 is a diagram corresponding to FIG. 3 in a case where the pair of attachment members in the joint-target pipe attachment part is brought into a closed state by an attachment member driving part;
[FIG. 11] FIG. 11 is a side view showing a state where a pipe is supported by a plurality of supports at a predetermined height and aligned with the pipe holder of the pipe joining device;
[FIG. 12] FIG. 12 is a side view showing a state where a spigot of the pipe is held by the pipe holder;
[FIG. 13] FIG. 13 is a top view showing a state where a pair of pipe grasping parts is grasping an outer circumferential surface of the pipe on the spigot side;
[FIG. 14] FIG. 14 is a partial cross-sectional view of a socket, showing how lubricant is supplied from a reservoir to a lubricant supply port of a socket cover via a supply piping part;
[FIG. 15] FIG. 15 is a partial cross-sectional view of the socket, showing how the socket cover is removed from the socket of the joint-target pipe by the supply piping part;
[FIG. 16] FIG. 16 is a top view showing how axial movement parts move to thereby draw the spigot of the pipe closer to the socket of the joint-target pipe via the pair of pipe grasping parts; and
[FIG. 17] FIG. 17 is a side view showing how the joining device is lifted by a work machine or the like to be separated from the pipe and the joint-target pipe.

### DESCRIPTION OF EMBODIMENTS

Embodiments of the present disclosure are described below with reference to the drawings. In each of the drawings, the same parts/portions are denoted by the same reference numerals, and the description thereof will not be repeated. Note that the dimensions of the constituent members in each drawing do not faithfully represent the actual dimensions of the constituent members or the dimensional ratios and the like among them.

In the following description, an axial direction means a direction in which an axis L2 of a joint-target pipe W2 extends. A left-right direction means a horizontal direction and a direction orthogonal to the axial direction. The horizontal direction includes not only the horizontal direction in the strict sense, but also a direction intersecting with an up-down direction.

Furthermore, in the following description, expressions such as "secure", "connect", and "attach" (hereinafter, referred to as securing and the like) include not only cases in which the members are subjected to direct securing and the like to each other but also cases in which the members are subjected to securing and the like via another member. That is, in the following description, the expressions such as securing and the like include both direct securing and the like and indirect securing and the like between members.

### (Pipe Joining Device)

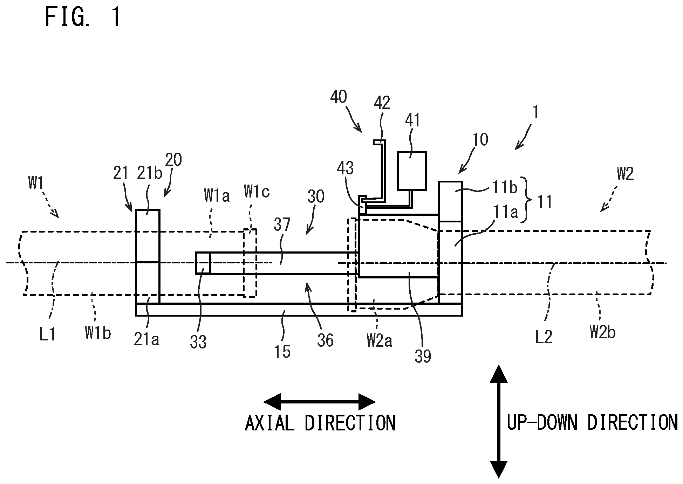

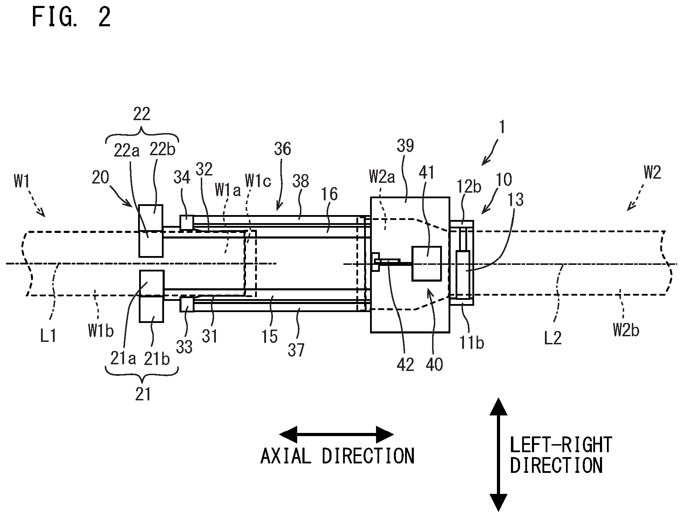

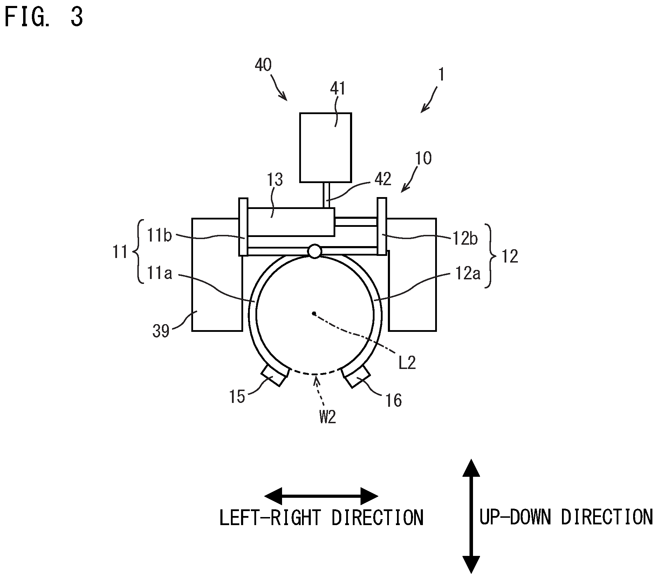

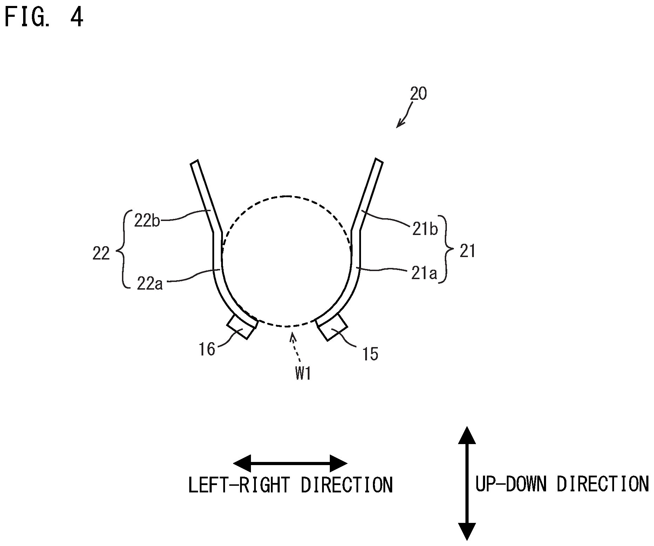

FIG. 1 is a side view showing a schematic configuration of a pipe joining device 1 according to an embodiment of the present disclosure. FIG. 2 is a top view showing the schematic configuration of the pipe joining device 1. FIG. 3 is a diagram of the pipe joining device 1 viewed in the axial direction from the joint-target pipe W2 side. FIG. 4 is a diagram of a pipe holder 20 of the pipe joining device 1 viewed in the axial direction from a pipe W1 side.

The pipe joining device 1 is a device for inserting a spigot W1a of the pipe W1 into a socket W2a of the joint-target pipe W2 for joint. The pipe joining device 1 is used in a trench where the pipe W1 and the joint-target pipe W2 are laid. The pipe joining device 1 is installed in the trench by a work machine, for example. The pipe joining device 1 has a size that allows installation in the trench.

The pipe W1 and the joint-target pipe W2 are water pipes, for example. The pipe W1 and the joint-target pipe W2 may be pipes other than the water pipes, such as sewage pipes, agricultural water pipes, and gas pipes. The pipe W1 and the joint-target pipe W2 may be ductile cast-iron pipes, other metal pipes, or resin pipes.

With an axis L1 of the spigot W1a of the pipe W1 being positionally adjusted relative to the axis L2 of the socket W2a of the joint-target pipe W2, the pipe joining device 1 brings the spigot W1a of the pipe W1 closer to the socket W2a of the joint-target pipe W2 to be inserted therein. For details, as shown in FIG. 1, the pipe joining device 1 has a joint-target pipe attachment part 10, the pipe holder 20, a pipe moving mechanism 30, and a lubricant supplier 40.

The joint-target pipe attachment part 10 is attached to the socket W2a side of the joint-target pipe W2. Specifically, the joint-target pipe attachment part 10 is attached to the socket W2a side in a straight pipe portion W2b of the joint-target pipe W2. As a result, when a movement part 36 draws the spigot W1a of the pipe W1 closer to the socket W2a of the joint-target pipe W2 as described later, the joint-target pipe attachment part 10 contacts the socket W2a of the joint-target pipe W2 and a reaction force generated during such drawing can be received by the socket W2a of the joint-target pipe W2.

As shown in FIG. 3, the joint-target pipe attachment part 10 has a pair of attachment members 11 and 12 and an attachment member driving part 13. The pair of attachment members 11 and 12 sandwiches the straight pipe portion W2b of the joint-target pipe W2, to thereby be attached to the straight pipe portion W2b. The pair of attachment members 11 and 12 has pipe attachment parts 11a and 12a and driving force input parts 11b and 12b.

Each of the pipe attachment parts 11a and 12a has, viewed in the axial direction, a shape of a semicircle along the outer circumferential surface of the straight pipe portion W2b of the joint-target pipe W2. The pipe attachment parts 11a and 12a are attached onto the outer circumferential surface of the straight pipe portion W2b of the joint-target pipe W2. The driving force input parts 11b and 12b are connected to the pipe attachment parts 11a and 12a so that the driving force input from the attachment member driving part 13 can switch the pipe attachment parts 11a and 12a between a closed state of sandwiching the straight pipe portion W2b of the joint-target pipe W2 and an open state of being away from the straight pipe portion W2b of the joint-target pipe W2. In the present embodiment, the driving force input parts 11b and 12b are connected to upper ends of the pipe attachment parts 11a and 12a. The pair of attachment members 11 and 12 is connected, for example, by a rotary shaft at a portion connecting the pipe attachment parts 11a and 12a and the driving force input parts 11b and 12b, so as to be rotatable about an axis extending in the axial direction.

The attachment member driving part 13 is provided between the driving force input parts 11b and 12b so that the driving force can be transmitted to the driving force input parts 11b and 12b. The attachment member driving part 13 provides, to the driving force input parts 11b and 12b, such a driving force that switches the pipe attachment parts 11a and 12a between the open state and the closed state described above. In the present embodiment, the attachment member driving part 13 extends and retracts to change the distance between the driving force input parts 11b and 12b, to thereby switch the pipe attachment parts 11a and 12a between the open state and the closed state. The attachment member driving part 13 is a hydraulic cylinder, for example.

With the above configuration, the pair of attachment members 11 and 12 can be switched between the closed state and the open state by the driving force generated by the attachment member driving part 13, the closed state being a state in which the pipe attachment parts 11a and 12a sandwich the straight pipe portion W2b of the joint-target pipe W2, the open state being a state in which the pipe attachment parts 11a and 12a are away from the straight pipe portion W2b of the joint-target pipe W2. With the joint-target pipe attachment part 10 being attached to the straight pipe portion W2b of the joint-target pipe W2, the pair of attachment members 11 and 12 sandwiches the straight pipe portion W2b.

As shown in FIGS. 1 and 2, the pipe holder 20 holds the spigot W1a side of the pipe W1. Specifically, the pipe holder 20 holds the spigot W1a side of a straight pipe portion W1b of the pipe W1.

As shown in FIG. 4, the pipe holder 20 has a pair of holding members 21 and 22. The pair of holding members 21 and 22 sandwiches the straight pipe portion W1b of the pipe W1 to hold the straight pipe portion W1b. The pair of holding members 21 and 22 has pipe contact parts 21a and 22a and guides 21b and 22b.

Each of the pipe contact parts 21a and 22a has, viewed in the axial direction, a shape of an arc along the outer circumferential surface of the straight pipe portion W1b of the pipe W1. The pipe contact parts 21a and 22a contact the straight pipe portion W1b of the pipe W1 to hold the straight pipe portion W1b.

The guides 21b and 22b are connected to upper ends of the pipe contact parts 21a and 22a. The guides 21b and 22b are formed such that the distance therebetween becomes wider from the lower end toward the upper end when viewed in the axial direction. With this configuration, the straight pipe portion W1b of the pipe W1 inserted between the guides 21b and 22b can be smoothly guided between the pipe contact parts 21a and 22a.

As shown in FIGS. 1 and 2, the joint-target pipe attachment part 10 and the pipe holder 20 are coupled together in the axial direction. Specifically, one attachment member 11 of the pair of attachment members 11 and 12 in the joint-target pipe attachment part 10 is coupled in the axial direction to one holding member 21 of the pair of holding members 21 and 22 in the pipe holder 20 via a coupling part 15. The other attachment member 12 of the pair of attachment members 11 and 12 is coupled in the axial direction to the other holding member 22 of the pair of holding members 21 and 22 via a coupling part 16. With this configuration, when the pair of attachment members 11 and 12 is in the open state, the pair of holding members 21 and 22 is also in an open state, and when the pair of attachment members 11 and 12 is in the closed state, the pair of holding members 21 and 22 is also in a closed state.

As a result, by switching the pair of attachment members 11 and 12 between the open state and the closed state without separately controlling the pair of attachment members 11 and 12 in the joint-target pipe attachment part 10 and the pair of holding members 21 and 22 in the pipe holder 20, the pair of holding members 21 and 22 can be switched between the closed state of sandwiching the joint-target pipe W2 and the pipe W1 and the open state of being away from the joint-target pipe W2 and the pipe W1. Therefore, the joint-target pipe W2 and the pipe W1 can be easily held by the pipe joining device 1.

Moreover, by axially coupling the joint-target pipe attachment part 10 and the pipe holder 20 as described above, the axis L1 of the spigot W1a of the pipe W1 held by the pipe holder 20 can be positionally adjusted relative to the axis L2 of the socket W2a of the joint-target pipe W2 to which the joint-target pipe attachment part 10 is attached. In the present embodiment, the positions of the spigot W1a of the pipe W1 and the socket W2a of the joint-target pipe W2 are adjusted so that the axis L1 of the spigot W1a of the pipe W1 coincides with the axis L2 of the socket W2a of the joint-target pipe W2.

Therefore, the pipe joining device 1 according to the present embodiment eliminates the need of the work of positionally adjusting the axis of the spigot W1a of the pipe W1 to the axis of the socket W2a of the joint-target pipe W2. Therefore, it is possible to efficiently perform the joining work between the spigot W1a of the pipe W1 and the socket W2a of the joint-target pipe W2.

Note that the coupling parts 15 and 16 have such a length that allows the pipe holder 20 to be coupled with a predetermined gap in the axial direction to the joint-target pipe attachment part 10. The predetermined gap described above is such a distance that allows the pipe joining device 1 according to the present embodiment to perform the work of inserting the spigot W1a of the pipe W1 into the socket W2a of the joint-target pipe W2 for coupling.

The pipe moving mechanism 30 grasps the spigot W1a side of the pipe W1 and moves the spigot W1a toward the socket W2a of the joint-target pipe W2, to thereby insert the spigot W1a into the socket W2a. The pipe moving mechanism 30 has a pair of pipe grasping parts 31 and 32 and a movement part 36.

The pair of pipe grasping parts 31 and 32 sandwiches and grasps the spigot W1a side of the pipe W1. The pair of pipe grasping parts 31 and 32 is attached to the tip end portions of a pair of axial movement parts 37 and 38 in the movement part 36 described later via connectors 33 and 34, and is configured to be engageable with a spigot protrusion W1c located at the axial tip end of the spigot W1a of the pipe W1. Each of the pair of pipe grasping parts 31 and 32 is a plate member having, viewed in the axial direction, a shape of an arc along the outer circumferential surface of the spigot W1a side of the pipe W1. The pair of plate-like pipe grasping parts 31 and 32 is attached so as to extend from the tip end portions of the pair of axial movement parts 37 and 38 toward the base end sides thereof.

The thickness of each of the pair of pipe grasping parts 31 and 32 is equal to or smaller than the radial protruding height of the spigot protrusion W1c. As described later, this prevents the pair of pipe grasping parts 31 and 32 from interfering with the socket W2a when the spigot W1a is inserted into the socket W2a of the joint-target pipe W2 with the spigot W1a side of the pipe W1 being grasped by the pair of pipe grasping parts 31 and 32.

The connectors 33 and 34 connect the tip ends of the pair of axial movement parts 37 and 38 and the pair of pipe grasping parts 31 and 32 to each other so as to allow rotation about axes extending in the up-down direction. That is, the connectors 33 and 34 are connected to the tip ends of the pair of axial movement parts 37 and 38 so as to be rotatable about the above-described axes. Furthermore, the connectors 33 and 34 are connected to the pair of pipe grasping parts 31 and 32. In a top view, the gap between the connectors 33 and 34 in the left-right direction is equal to the outer diameter of the pipe W1 on the spigot W1a side in a parallel state and smaller than the outer diameter of the pipe W1 on the spigot W1a side in a state where the connectors 33 and 34 are rotated about the above-described axes relative to the tip ends of the pair of axial movement parts 37 and 38. The pair of pipe grasping parts 31 and 32 is elastically supported against the connectors 33 and 34 or the pair of axial movement parts 37 and 38 by elastic members (not shown) so as to be displaced in a direction of approaching each other.

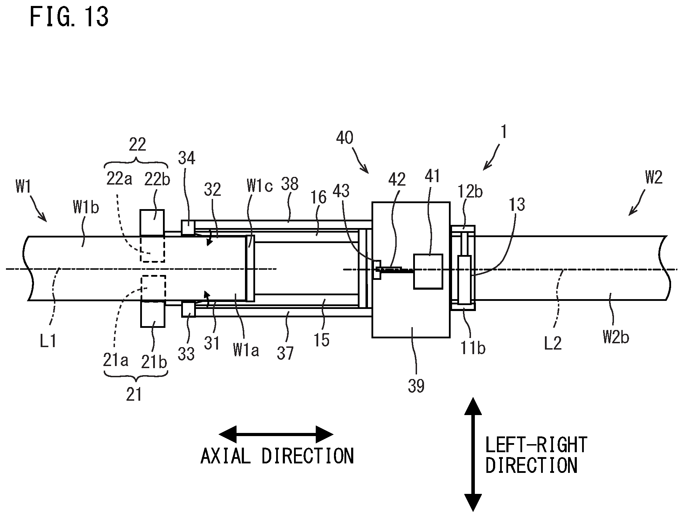

Therefore, when the spigot W1a side of the pipe W1 is inserted between the connectors 33 and 34, the outer circumferential surface of the pipe W1 on the spigot W1a side contacts the connectors 33 and 34. As a result, the connectors 33 and 34 and the pair of pipe grasping parts 31 and 32 rotate about the above-described axes to move the pair of pipe grasping parts 31 and 32 toward the outer circumferential surface of the pipe W1 on the spigot W1a side (See the solid arrows in FIG. 13). Moreover, at this time, the elastic members described above bias the pair of pipe grasping parts 31 and 32 toward the outer circumferential surface of the pipe W1 on the spigot W1a side. As a result, the pair of pipe grasping parts 31 and 32 comes into close contact with the outer circumferential surface of the pipe W1 on the spigot W1a side.

Note that the pair of pipe grasping parts 31 and 32 may be configured to generate an elastic restoring force toward the outer circumferential surface of the pipe W1 on the spigot W1a side.

As shown in FIGS. 1 and 2, the movement part 36 moves the pair of pipe grasping parts 31 and 32 grasping the spigot W1a side of the pipe W1 in the axial direction toward the socket W2a of the joint-target pipe W2. In detail, the movement part 36 has the pair of axial movement parts 37 and 38 and a movement support 39.

The pair of axial movement parts 37 and 38 is configured so that each of the tip ends thereof can move in the axial direction relative to the movement support 39. Each of the pair of axial movement parts 37 and 38 may be, for example, a hydraulic cylinder that extends and retracts in the axial direction, or a mechanism that can move in the axial direction, such as a rack and pinion. The base end sides of the pair of axial movement parts 37 and 38 are supported by the movement support 39.

The movement support 39 is connected to the joint-target pipe attachment part 10. The movement support 39 may be connected, for example, to a rotary shaft connecting the pair of attachment members 11 and 12 so as to allow rotation thereof or to the attachment member driving part 13 in the joint-target pipe attachment part 10.

Note that the movement part 36 may have a position detection sensor (not shown) in order to control the amount of movement of the pair of axial movement parts 37 and 38. The position detection sensor described above may be provided to at least one of the pair of axial movement parts 37 and 38 so as to allow, for example, detection of a state in which the spigot W1a of the pipe W1 is inserted into the socket W2a of the joint-target pipe W2 to a predetermined position.

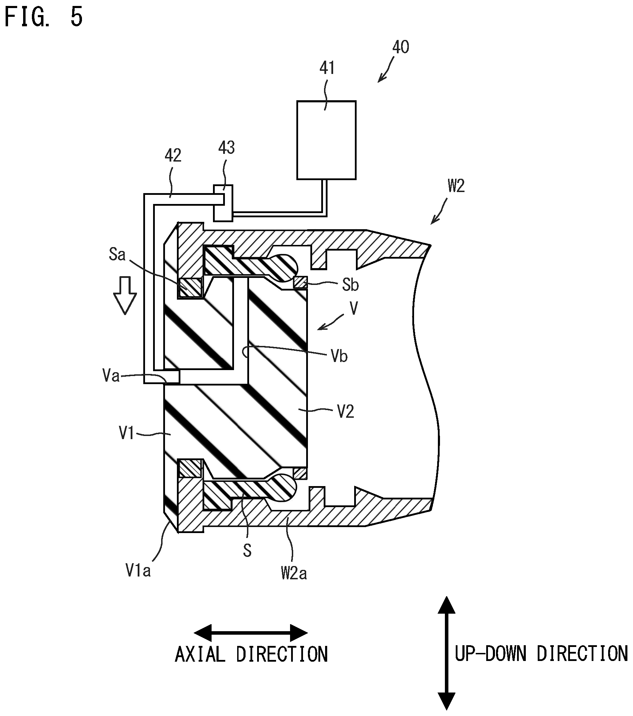

The lubricant supplier 40 supplies lubricant to the inner circumferential surface of a rubber seal S (seal member, see FIG. 5) installed onto the inner surface of the socket W2a of the joint-target pipe W2, before inserting the spigot W1a of the pipe W1 into the socket W2a of the joint-target pipe W2. The rubber seal S is a member made of rubber that seals between the outer circumferential surface of the spigot W1a of the pipe W1 and the inner circumferential surface of the socket W2a of the joint-target pipe W2. Note that the seal member may be made of a material other than rubber as long as the material can seal between the outer circumferential surface of the spigot W1a of the pipe W1 and the inner circumferential surface of the socket W2a of the joint-target pipe W2.

FIG. 5 is a diagram schematically showing how the lubricant supplier 40 supplies lubricant to the inner circumferential surface of the rubber seal S. The lubricant supplier 40 supplies lubricant to a lubricant supply port Va provided to a socket cover V that covers the opening of the socket W2a of the joint-target pipe W2, to thereby supply the lubricant onto the inner circumferential surface of the rubber seal S via a lubricant supply path Vb formed in the socket cover V.

The socket cover V can be attached to the socket W2a so as to cover the opening of the socket W2a of the joint-target pipe W2. The socket cover V prevents dust and the like from entering the socket W2a of the joint-target pipe W2. The socket cover V has a socket cover body V1 to be disposed on the end surface of the socket W2a of the joint-target pipe W2 and a socket cover insertion portion V2 to be inserted into the socket W2a.

The socket cover body V1 has a tapered portion V1a on the outer circumferential portion thereof. This prevents dust from accumulating on the outer circumferential surface of the socket cover V. The socket cover insertion portion V2 has at least one lubricant supply path Vb inside thereof. The lubricant supply path Vb communicates with the outer circumferential surface of the socket cover insertion portion V2. The socket cover body V1 has the lubricant supply port Va (hole for lubricant supply) that connects to the lubricant supply path Vb of the socket cover insertion portion V2. The tip end of a supply piping part 42 of the lubricant supplier 40, which will be described later, can be inserted into the lubricant supply port Va. The lubricant supply port Va has a size that allows the tip end of the supply piping part 42 of the lubricant supplier 40 to fit thereinto. With this configuration, as described later, using the supply piping part 42 of the lubricant supplier 40, the socket cover V can be collected from the socket W2a of the joint-target pipe W2.

The lubricant supplier 40 has a reservoir 41, the supply piping part 42, and a support member 43. The reservoir 41 reserves lubricant. The reservoir 41 supplies lubricant to the supply piping part 42. The supply piping part 42 supplies, with being inserted into the lubricant supply port Va of the socket cover V, the lubricant from the reservoir 41 to the lubricant supply port Va and the lubricant supply path Vb of the socket cover V.

The supply piping part 42 is rotatably supported by the support member 43. With this configuration, after the joint-target pipe attachment part 10 of the pipe joining device 1 is attached to the joint-target pipe W2, the supply piping part 42 is rotated relative to the support member 43, to thereby allow the tip end of the supply piping part 42 to be inserted into the lubricant supply port Va of the socket cover V that covers the opening of the socket W2a of the joint-target pipe W2. Moreover, with the tip end of the supply piping part 42 being fitted into the lubricant supply port Va of the socket cover V, the supply piping part 42 is rotated relative to the support member 43, to thereby allow the socket cover V to be removed from the opening of the socket W2a of the joint-target pipe W2. Therefore, the lubricant supplier 40 also functions as a socket cover remover that removes the socket cover V from the opening of the socket W2a of the joint-target pipe W2.

Note that annular lubricant seals Sa and Sb are disposed between the socket cover insertion portion V2 of the socket cover V and the opening end of the socket W2a of the joint-target pipe W2 and between the tip end of the rubber seal S and the socket cover insertion portion V2 of the socket cover V, respectively. These lubricant seals Sa and Sb can seal the gaps between the socket cover V and the rubber seal S in the axial direction.

The pipe joining device 1 according to the present embodiment joins the spigot W1a of the pipe W1 to the socket W2a of the joint-target pipe W2 to be joined to the pipe W1. This pipe joining device 1 has the joint-target pipe attachment part 10 to be attached to the socket W2a side of the joint-target pipe W2, the pipe grasping parts 31 and 32 that grasp the spigot W1a side of the pipe W1, and the movement part 36 that moves at least one of the joint-target pipe attachment part 10 and the pipe grasping parts 31 and 32 in the axial direction so as to join the spigot W1a of the pipe W1 and the socket W2a of the joint-target pipe W2 to each other in the axial direction.

In the configuration described above, at least one of the joint-target pipe attachment part 10 attached to the joint-target pipe W2 and the pipe grasping parts 31 and 32 that grasp the pipe W1 is moved in the axial direction by the movement part 36, to thereby join the spigot W1a of the pipe W1 and the socket W2a of the joint-target pipe W2 to each other in the axial direction. Therefore, using the pipe joining device 1, the spigot W1a of the pipe W1 and the socket W2a of the joint-target pipe W2 can be easily joined to each other.

The pipe joining device 1 having the above configuration is not a device attached to the tip end of an arm of a work machine as in the conventional case, but a device that allows the pipe W1 and the joint-target pipe W2 to be joined to each other with being disposed in a trench. Therefore, there is no need to grasp the pipe W1 by the work machine via an attachment in joining the pipe W1 and the joint-target pipe W2 to each other. Thus, the pipe joining device 1 can be formed into a lightweight and compact configuration.

Therefore, it is possible to achieve the lightweight and compact pipe joining device 1 that allows pipes to be joined to each other without requiring a worker to work in a trench and can be used in a narrow construction site and the like.

Furthermore, in the present embodiment, the pipe joining device 1 further has the pipe holder 20 that is coupled to the joint-target pipe attachment part 10 and holds the spigot W1a side of the pipe W1 with the axis of the spigot W1a of the pipe W1 being positionally adjusted relative to the axis of the socket W2a of the joint-target pipe W2 so as to allow the spigot W1a of the pipe W1 and the socket W2a of the joint-target pipe W2 to be joined to each other.

The pipe holder 20 that holds the spigot W1a side of the pipe W1 is coupled to the joint-target pipe attachment part 10 to be attached to the socket W2a side of the joint-target pipe W2. Therefore, the axis of the spigot W1a of the pipe W1 to be held by the pipe holder 20 can be positionally adjusted more reliably and easily relative to the axis of the socket W2a of the joint-target pipe W2. This eliminates the need of the work of aligning the axis of the spigot W1a of the pipe W1 with the axis of the socket W2a of the joint-target pipe W2 in joining the spigot W1a of the pipe W1 and the socket W2a of the joint-target pipe W2 to each other. As a result, it is possible to efficiently perform the joining work between the spigot W1a of the pipe W1 and the socket W2a of the joint-target pipe W2.

Furthermore, in the present embodiment, the joint-target pipe attachment part 10 has the pair of attachment members 11 and 12 that sandwiches the joint-target pipe W2. The pipe holder 20 has the pair of holding members 21 and 22 that sandwiches the pipe W1. One of the pair of attachment members 11 and 12 is coupled to one of the pair of holding members 21 and 22. The other one of the pair of attachment members 11 and 12 is coupled to the other one of the pair of holding members 21 and 22. The pair of attachment members 11 and 12 and the pair of holding members 21 and 22 are configured to be switchable between the closed state in which the pair of attachment members 11 and 12 sandwiches the joint-target pipe W2 and the pair of holding members 21 and 22 sandwiches the pipe W1 and the open state in which the pair of attachment members 11 and 12 is away from the joint-target pipe W2 and the pair of holding members 21 and 22 is away from the pipe W1.

In the configuration described above, the pair of attachment members 11 and 12 of the joint-target pipe attachment part 10 is coupled to the pair of holding members 21 and 22 of the pipe holder 20, respectively. Therefore, by switching the pair of attachment members 11 and 12 and the pair of holding members 21 and 22 between the closed state in which the pair of attachment members 11 and 12 sandwich the joint-target pipe W2 and the pair of holding members 21 and 22 sandwich the pipe W1 and the open state in which the pair of attachment members 11 and 12 is away from the joint-target pipe W2 and the pair of holding members 21 and 22 is away from the pipe W1, the joint-target pipe attachment part 10 can be attached to the joint-target pipe W2 and the pipe holder 20 can be attached to the pipe W1. As a result, the joint-target pipe attachment part 10 can be easily attached to the joint-target pipe W2 and the pipe holder 20 can be easily attached to the pipe W1. Therefore, it is possible to efficiently perform the joining work between the spigot W1a of the pipe W1 and the socket W2a of the joint-target pipe W2.

Furthermore, in the present embodiment, the movement part 36 moves the pipe grasping parts 31 and 32 so as to draw the pipe grasping parts 31 and 32 closer to the joint-target pipe attachment part 10 in the axial direction described above. As a result, the spigot W1a of the pipe W1 grasped by the pipe grasping parts 31 and 32 is moved to the socket W2a of the joint-target pipe W2 to which the joint-target pipe attachment part 10 is attached, to allow the spigot W1a to be joined to the socket W2a. Therefore, it is possible to easily join the spigot W1a of the pipe W1 to the socket W2a of the joint-target pipe W2 installed in the trench.

Furthermore, in the present embodiment, the pipe grasping parts 31 and 32 have a thickness equal to or smaller than the protruding height of the spigot protrusion W1c located at the spigot tip end of the pipe W1, come into close contact with the outer circumferential surface of the pipe W1 on the spigot W1a side, and engage with the spigot protrusion W1c.

As a result, the spigot protrusion W1c of the pipe W1 is pushed in the axial direction by the pipe grasping parts 31 and 32 to move the spigot W1a of the pipe W1 toward the socket W2a of the joint-target pipe W2. Moreover, by making the thickness of the pipe grasping parts 31 and 32 equal to or smaller than the protruding height of the spigot protrusion W1c, it is possible to prevent the pipe grasping parts 31 and 32 from interfering with the socket W2a of the joint-target pipe W2 when the spigot W1a of the pipe W1 is inserted into the socket W2a of the joint-target pipe W2. Therefore, it is possible to efficiently perform the joining work between the spigot W1a of the pipe W1 and the socket W2a of the joint-target pipe W2.

Furthermore, in the present embodiment, the pipe joining device 1 further has the lubricant supplier 40 that supplies lubricant to the inner circumferential surface of the rubber seal S attached onto the inner circumferential surface of the socket W2a of the joint-target pipe W2. Before joining the spigot W1a of the pipe W1 to the socket W2a of the joint-target pipe W2, lubricant can be supplied to the inner circumferential surface of the rubber seal S attached onto the inner circumferential surface of the socket W2a of the joint-target pipe W2 by the lubricant supplier 40. Therefore, the worker is not required to enter the trench for applying the lubricant to the inner circumferential surface of the rubber seal S. Therefore, it is possible to efficiently perform the joining work between the spigot W1a of the pipe W1 and the socket W2a of the joint-target pipe W2.

Furthermore, in the present embodiment, the lubricant supplier 40 has the reservoir 41 in which lubricant is reserved, and the supply piping part 42 whose tip end portion can be inserted into the lubricant supply port Va for supplying lubricant formed in the socket cover V that covers the opening of the socket W2a of the joint-target pipe W2 and that can supply lubricant from the reservoir 41 into the lubricant supply port Va.

With this configuration, it is possible to achieve a configuration of the lubricant supplier 40 that supplies lubricant to the inner circumferential surface of the rubber seal S attached onto the inner circumferential surface of the socket W2a of the joint-target pipe W2. Moreover, lubricant can be supplied to the inner circumferential surface of the rubber seal S by utilizing the socket cover V that covers the opening of the socket W2a of the joint-target pipe W2. Therefore, it is possible to efficiently perform the joining work between the spigot W1a of the pipe W1 and the socket W2a of the joint-target pipe W2.

### (Method for Joining Pipes)

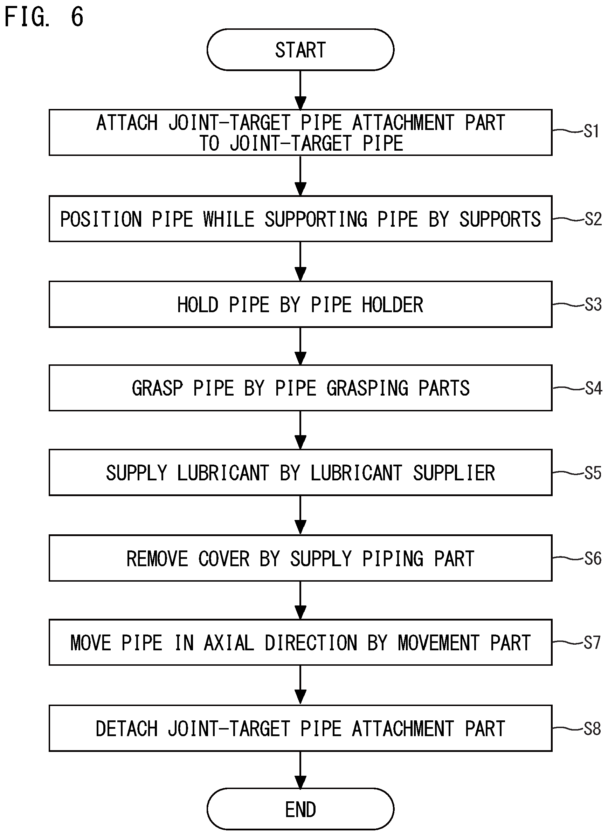

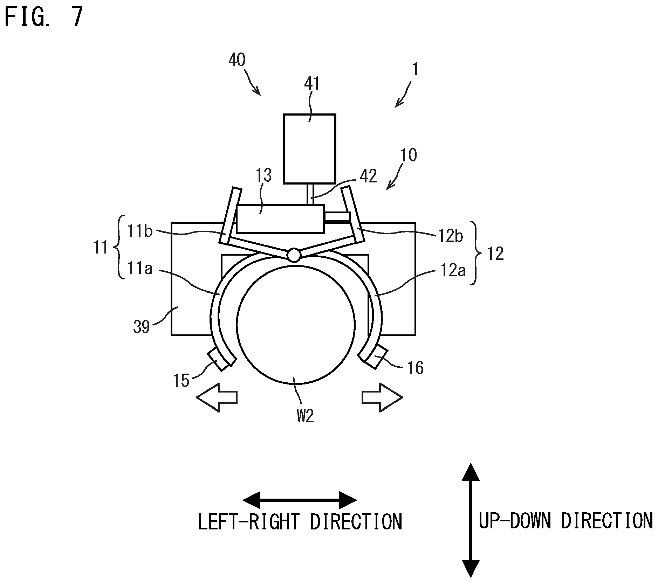

Next, a method for joining pipes will be described, the method using the pipe joining device 1 having the above-described configuration to join the spigot W1a of the pipe W1 and the socket W2a of the joint-target pipe W2 to each other. FIG. 6 is a flowchart showing the method for joining pipes using the pipe joining device 1. FIGS. 7 to 17 are diagrams schematically illustrating the method for joining pipes using the pipe joining device 1.

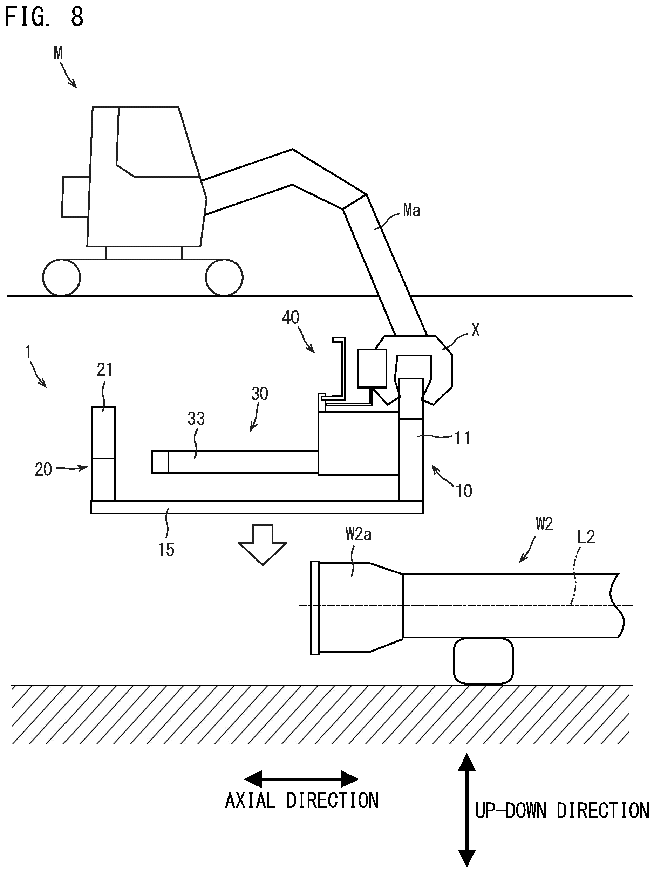

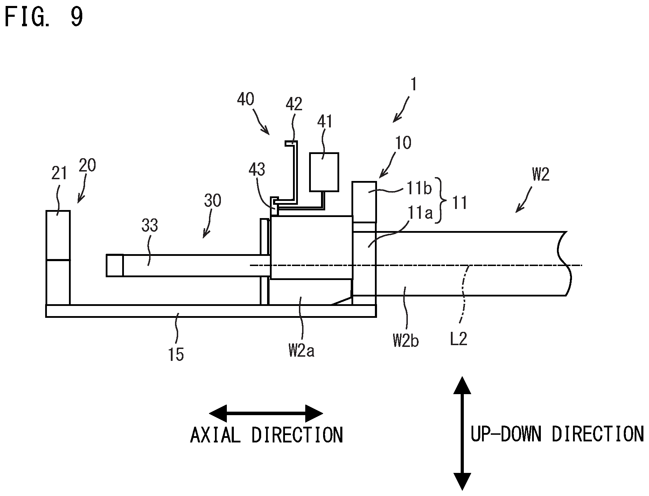

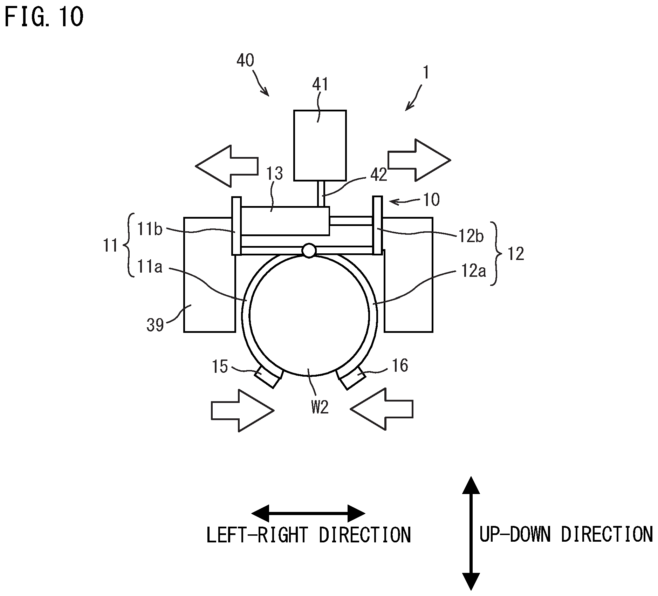

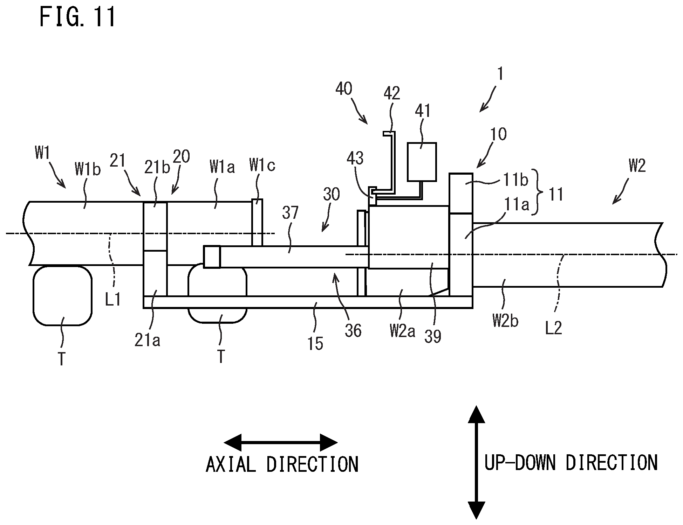

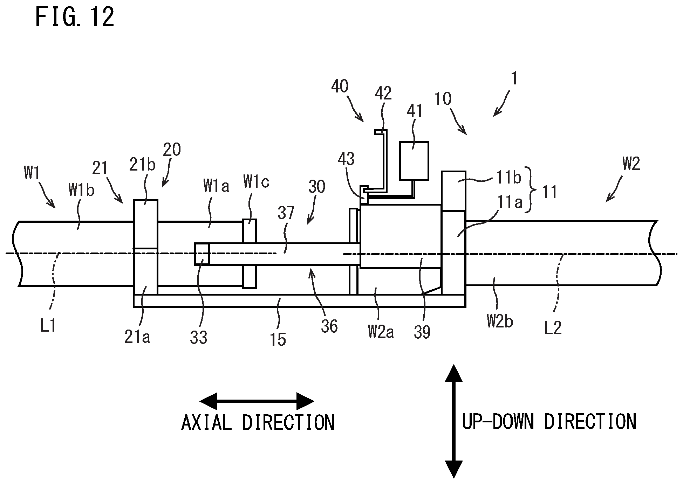

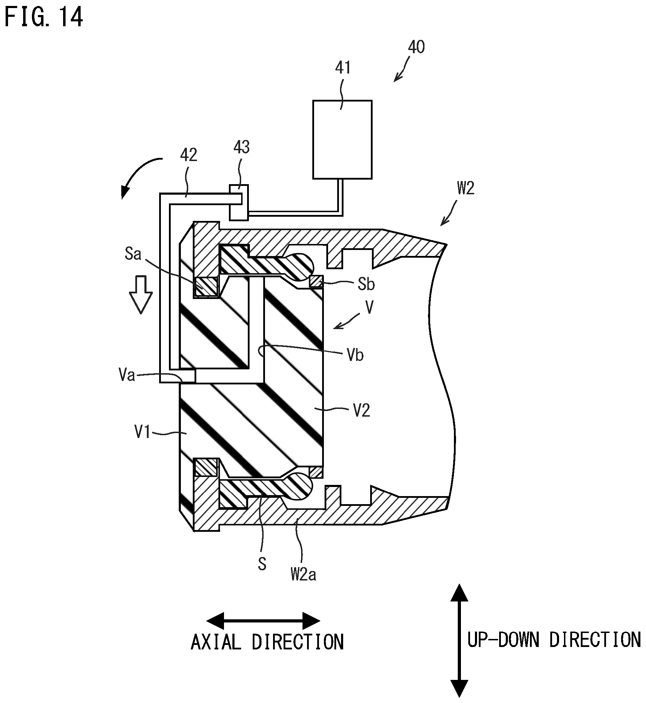

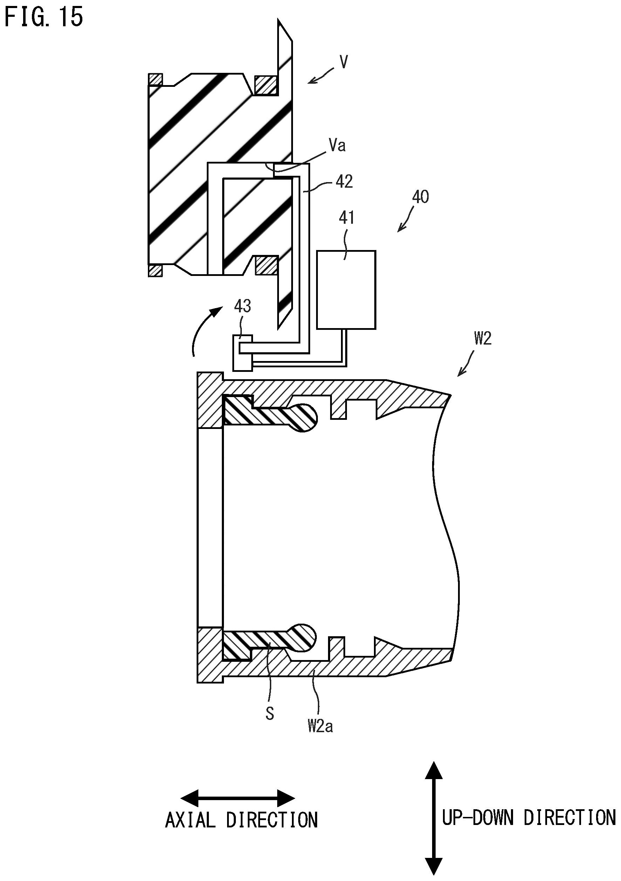

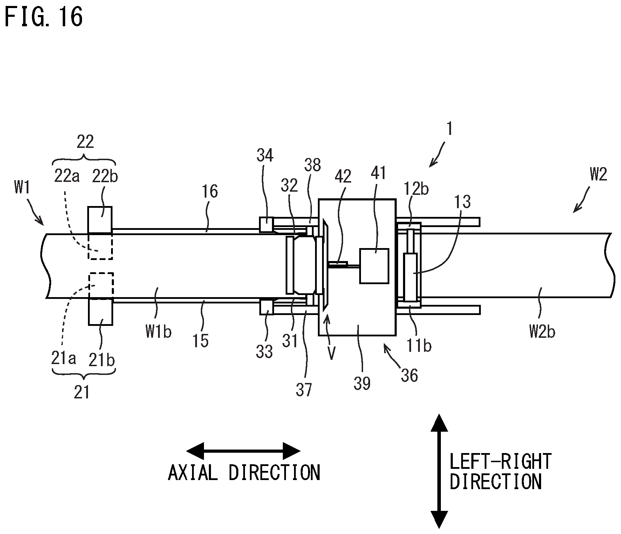

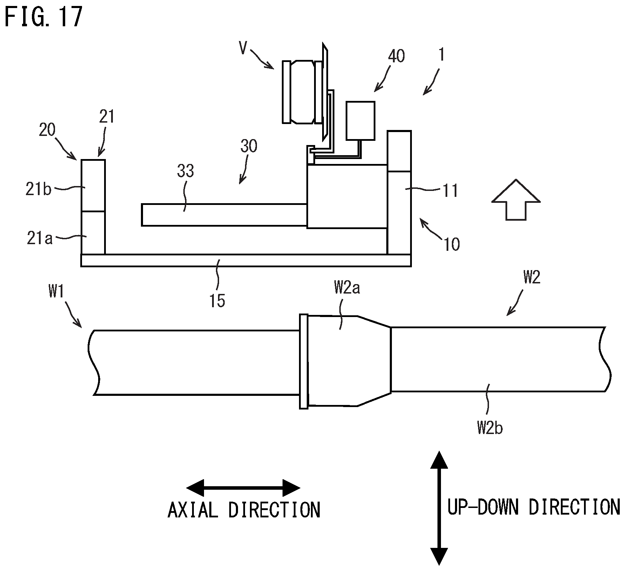

In detail, FIG. 7 is a diagram corresponding to FIG. 3 in a case where the pair of attachment members 11 and 12 in the joint-target pipe attachment part is in the open state. FIG. 8 shows how the pipe joining device 1 is grasped by a grasping device X attached to the tip end of an arm Ma of a work machine M and carried to the joint-target pipe W2 in the trench. FIG. 9 is a side view showing a state where the joint-target pipe attachment part 10 of the pipe joining device 1 is attached to the joint-target pipe W2. FIG. 10 is a diagram corresponding to FIG. 3 in a case where the pair of attachment members 11 and 12 in the joint-target pipe attachment part 10 is brought into the closed state by the attachment member driving part 13. FIG. 11 is a side view showing a state where the pipe W1 is supported by a plurality of supports T at a predetermined height and aligned with the pipe holder 20 of the pipe joining device 1. FIG. 12 is a side view showing a state where the spigot W1a of the pipe W1 is held by the pipe holder 20. FIG. 13 is a top view showing a state where the pair of pipe grasping parts 31 and 32 is grasping the outer circumferential surface of the pipe W1 on the spigot W1a side. FIG. 14 is a partial cross-sectional view of the socket W2a, showing how lubricant is supplied from the reservoir 41 to the lubricant supply port Va of the socket cover V via the supply piping part 42. FIG. 15 is a partial cross-sectional view of the socket W2a, showing how the socket cover V is removed from the socket W2a of the joint-target pipe W2 by the supply piping part 42. FIG. 16 is a top view showing how the axial movement parts 37 and 38 move to thereby draw the spigot W1a of the pipe W1 closer to the socket W2a of the joint-target pipe W2 via the pair of pipe grasping parts 31 and 32. FIG. 17 is a side view showing how the pipe joining device 1 is lifted by a work machine or the like to be separated from the pipe W1 and the joint-target pipe W2.

In step S1 of the flowchart shown in FIG. 6, the joint-target pipe attachment part 10 of the pipe joining device 1 is attached to the joint-target pipe W2.

Specifically, as shown in FIG. 7, the pair of attachment members 11 and 12 of the joint-target pipe attachment part 10 in the pipe joining device 1 is in the open state. In this state, as shown in FIG. 8, the pipe joining device 1 is carried by the work machine M into the trench where the pipe W1 is to be laid. The grasping device X is attached to the tip end of the arm Ma of the work machine M. The pipe joining device 1 is grasped by the grasping device X attached to the tip end of the arm Ma of the work machine M and carried into the trench. At this time, as shown in FIG. 9, the pipe joining device 1 is disposed relative to the joint-target pipe W2 so that the joint-target pipe attachment part 10 is positioned on the socket W2a side of the straight pipe portion W2b of the joint-target pipe W2.

Note that the work machine M can perform various types of construction, work, and the like, by replacing the attachment connected to the tip end of the arm Ma. In the present embodiment, the work machine M is, for example, a mini backhoe that is a construction machine for excavation. Note that the work machine M may be a construction machine other than the mini backhoe, such as a truck crane, for example.

Next, as shown in FIG. 10, the pair of attachment members 11 and 12 in the joint-target pipe attachment part 10 is brought into the closed state by the attachment member driving part 13. In the present embodiment, the attachment member driving part 13 extends to drive the pair of attachment members 11 and 12 so that the pipe attachment parts 11a and 12a of the pair of attachment members 11 and 12 contact the outer circumferential surface of the straight pipe portion W2b of the joint-target pipe W2. As a result, the joint-target pipe attachment part 10 can be attached to the socket W2a side of the joint-target pipe W2.

At this time, the pair of holding members 21 and 22 in the pipe holder 20 of the pipe joining device 1 is coupled to the pair of attachment members 11 and 12 via the coupling parts 15 and 16, and thus is brought into the closed state similarly to the pair of attachment members 11 and 12.

Next, in step S2 of the flowchart shown in FIG. 6, the pipe W1 is positioned relative to the pipe holder 20 of the pipe joining device 1 while being held at a predetermined height by the supports T.

Specifically, as shown in FIG. 11, with the joint-target pipe attachment part 10 being attached to the socket W2a side of the joint-target pipe W2, the pipe W1 held at a predetermined height by the plurality of supports T is positioned relative to the pipe holder 20 of the pipe joining device 1. Note that the plurality of supports T supports the pipe W1 at a plurality of points in the axial direction. The supports T are configured so that the support height thereof can be changed. The supports T are constituted by, for example, a bag that can change the support height described above depending on the amount of fluid to be put inside.

Next, in step S3 of the flowchart shown in FIG. 6, the pipe W1 is held by the pipe holder 20 of the pipe joining device 1.

Specifically, the height of the supports T is gradually reduced to bring the pipe W1 into contact with the guides 21b and 22b of the pair of holding members 21 and 22 in the pipe holder 20 of the pipe joining device 1. As a result, the pipe W1 can be aligned in the left-right direction with the pipe holder 20. As shown in FIG. 12, the pipe W1 aligned by the guides 21b and 22b is held in contact with the pipe contact parts 21a and 22a of the pipe holder 20. As a result, the axis L1 of the spigot W1a of the pipe W1 is positionally adjusted relative to the axis L2 of the socket W2a of the joint-target pipe W2.

Next, in step S4 of the flowchart shown in FIG. 6, the spigot W1a side of the pipe W1 is grasped by the pair of pipe grasping parts 31 and 32.

Specifically, when the pipe W1 is brought into contact with the pipe contact parts 21a and 22a of the pipe holder 20 as described above, the pair of pipe grasping parts 31 and 32 rotates, as shown in FIG. 13, about rotation axes extending in the up-down direction at the connectors 33 and 34 to contact the outer circumferential surface of the pipe W1 on the spigot W1a side. As a result, the spigot W1a side of the pipe W1 is grasped by the pair of pipe grasping parts 31 and 32. Note that the pair of pipe grasping parts 31 and 32 is pressed against the outer circumferential surface of the pipe W1 on the spigot W1a side by spring members (not shown).

Next, in step S5 of the flowchart shown in FIG. 6, lubricant is supplied onto the inner circumferential surface of the rubber seal S by the lubricant supplier 40 via the lubricant supply port Va and the lubricant supply path Vb of the socket cover V.

Specifically, as shown in FIG. 14, the supply piping part 42 of the lubricant supplier 40 is rotated about the support member 43 (solid arrow in FIG. 14) to insert the tip end of the supply piping part 42 into the lubricant supply port Va of the socket cover V. Then, lubricant is supplied from the reservoir 41 to the lubricant supply port Va via the supply piping part 42 (white outlined arrow in FIG. 14). As a result, lubricant can be supplied onto the inner circumferential surface of the rubber seal S via the lubricant supply path Vb. The lubricant supplied from the lubricant supply path Vb spreads on the inner circumferential surface of the rubber seal S to cover the inner circumferential surface of the rubber seal S.

Note that the lubricant seals Sa and Sb prevent the lubricant supplied via the lubricant supply path Vb from spreading beyond the inner circumferential surface of the rubber seal S.

Next, in step S6 of the flowchart shown in FIG. 6, the socket cover V is removed from the socket W2a of the joint-target pipe W2 by the supply piping part 42 of the lubricant supplier 40.

Specifically, after supplying lubricant to the inner circumferential surface of the rubber seal S as described above, the supply piping part 42 is rotated about the support member 43 as shown in FIG. 15, to thereby remove the socket cover V into which the tip end of the supply piping part 42 is fitted from the socket W2a of the joint-target pipe W2. As a result, the socket cover V that covers the opening of the socket W2a of the joint-target pipe W2 can be removed by the supply piping part 42 of the lubricant supplier 40.

Next, in step S7 of the flowchart shown in FIG. 6, the pair of pipe grasping parts 31 and 32 is moved in the axial direction by the movement part 36 to make the spigot W1a of the pipe W1 closer to the socket W2a of the joint-target pipe W2 to be inserted therein.

Specifically, as shown in FIG. 16, the pair of axial movement parts 37 and 38 in the movement part 36 is moved in the axial direction. At this time, the tip ends of the pair of pipe grasping parts 31 and 32 connected to the end portions of the pair of axial movement parts 37 and 38 contact the spigot protrusion W1c of the spigot W1a of the pipe W1. Therefore, the axial movement parts 37 and 38 move in the axial direction as described above to thereby cause the spigot W1a of the pipe W1 to be drawn closer to the socket W2a of the joint-target pipe W2 via the pair of pipe grasping parts 31 and 32. The pair of pipe grasping parts 31 and 32 is inserted into the socket W2a together with the spigot W1a when the spigot W1a of the pipe W1 is inserted into the socket W2a of the joint-target pipe W2. Note that the axial movement parts 37 and 38 may be provided with a detector (not shown) that detects that the spigot W1a of the pipe W1 has been inserted to a predetermined position in the socket W2a of the joint-target pipe W2. This ensures insertion of the spigot W1a of the pipe W1 to the predetermined position in the socket W2a of the joint-target pipe W2.

Finally, in step S8 of the flowchart shown in FIG. 6, the pair of attachment members 11 and 12 in the joint-target pipe attachment part 10 and the pair of pipe contact parts 21a and 22a in the pipe holder 20 are brought into the open state, and the pipe joining device 1 is detached from the joint-target pipe W2.

Specifically, after the spigot W1a of the pipe W1 is inserted into the socket W2a of the joint-target pipe W2, the pair of attachment members 11 and 12 of the joint-target pipe attachment part 10 is brought into the open state, to thereby also bring the pair of pipe contact parts 21a and 22a of the pipe holder 20 into the open state. Then, as shown in FIG. 17, the pipe joining device 1 is lifted by a work machine or the like to be separated from the joined pipe W1 and joint-target pipe W2. At this time, the socket cover V, which has been removed by the supply piping part 42 of the lubricant supplier 40, is also collected together with the pipe joining device 1.

Thereafter, the flow shown in FIG. 6 ends (END).

Here, step S1 corresponds to a joint-target pipe attaching step, step S3 corresponds to a pipe holding step, step S4 corresponds to a pipe grasping step, step S5 corresponds to a lubricant supplying step, step S6 corresponds to a socket cover removing step, and step S7 corresponds to a moving step.

In the present embodiment, the lubricant supplier 40 further has the support member 43 that supports the supply piping part 42 so as to allow rotation about the base end portion thereof. The supply piping part 42 is configured to rotate about the base end portion described above with the tip end portion being inserted into the lubricant supply port Va of the socket cover V to allow the socket cover V to be removed from the socket W2a of the joint-target pipe W2.

With this configuration, the socket cover V can be removed from the socket W2a by utilizing the supply piping part 42 of the lubricant supplier 40 that supplies lubricant to the inner circumferential surface of the rubber seal S attached onto the inner circumferential surface of the socket W2a of the joint-target pipe W2. Therefore, it is possible to efficiently perform the joining work between the spigot W1a of the pipe W1 and the socket W2a of the joint-target pipe W2.

Furthermore, in the present embodiment, the pipe joining device 1 has the supply piping part 42 that functions as a socket cover remover that removes the socket cover V that covers the opening of the socket W2a from the socket W2a of the joint-target pipe W2. With this configuration, it is possible to easily remove the socket cover V that covers the opening of the socket W2a of the joint-target pipe W2 from the socket W2a.

Furthermore, in the present embodiment, the method for joining pipes for joining the spigot W1a of the pipe W1 to the socket W2a of the joint-target pipe W2 to be joined to the pipe W1 includes: the joint-target pipe attaching step of attaching the joint-target pipe attachment part 10 to the socket W2a side of the joint-target pipe W2; the pipe grasping step of grasping, by the pipe grasping parts 31 and 32, the spigot W1a side of the pipe W1; and the moving step of moving, by the movement part 36, at least one of the joint-target pipe attachment part 10 and the pipe grasping parts 31 and 32 in the axial direction so as to join the spigot W1a of the pipe W1 and the socket W2a of the joint-target pipe W2 to each other in the axial direction.

In the method described above, at least one of the joint-target pipe attachment part 10 attached to the joint-target pipe W2 and the pipe grasping parts 31 and 32 that grasp the pipe W1 is moved in the axial direction by the movement part 36, to thereby join the spigot W1a of the pipe W1 and the socket W2a of the joint-target pipe W2 to each other in the axial direction. Therefore, using the pipe joining device 1, the spigot W1a of the pipe W1 and the socket W2a of the joint-target pipe W2 can be easily joined to each other.

The device that can achieve the above-described method is not a device attached to the tip end of the arm of a work machine as in the conventional case, but a device that allows the pipe W1 and the joint-target pipe W2 to be joined to each other with being disposed in a trench. Therefore, there is no need to grasp the pipe W1 by the work machine via an attachment in joining the pipe W1 and the joint-target pipe W2 to each other. Thus, the device that can achieve the method described above can be achieved with a lightweight and compact configuration.

Therefore, it is possible to achieve a joining method that enables joining of pipes using the lightweight and compact pipe joining device 1 that can be used even in a narrow construction site and the like without requiring a worker to work in a trench.

Furthermore, in the present embodiment, the above-described method for joining pipes further includes the pipe holding step of holding, by the pipe holder 20, the spigot W1a side of the pipe W1 with the axis L1 of the spigot W1a of the pipe W1 being positionally adjusted relative to the axis L2 of the socket W2a of the joint-target pipe W2. In the moving step described above, at least one of the joint-target pipe attachment part 10 and the pipe grasping parts 31 and 32 is moved in the axial direction by the movement part 36 with the spigot W1a side of the pipe W1 being held in the pipe holding step.

As a result, the spigot W1a of the pipe W1 can be joined to the socket W2a of the joint-target pipe W2 with the axis L1 of the spigot W1a of the pipe W1 being positionally adjusted relative to the axis L2 of the socket W2a of the joint-target pipe W2. Therefore, the spigot W1a of the pipe W1 and the socket W2a of the joint-target pipe W2 can be easily joined to each other with being aligned with each other. As a result, it is possible to efficiently perform the joining work between the spigot W1a of the pipe W1 and the socket W2a of the joint-target pipe W2.

In the pipe holding step described above, the pipe W1 is supported by the supports T whose height is adjustable, and then the height of the supports T is lowered to hold the spigot W1a side of the pipe W1 by the pipe holder 20.

By lowering the height of the supports T that support the pipe W1 as described above, the spigot W1a side of the pipe W can be easily held by the pipe holder 20. Therefore, with a simple configuration, the axis L of the spigot W1a of the pipe W and the axis L2 of the socket W2a of the joint-target pipe W2 can be positionally adjusted relative to each other.

Furthermore, in the present embodiment, the method for joining pipes further includes the socket cover removing step of removing the cover that covers the opening of the socket of the joint-target pipe. With this step, it is possible to easily remove the socket cover V that covers the opening of the socket W2a of the joint-target pipe W2 from the socket W2a.

Furthermore, in the present embodiment, the method for joining pipes further includes the lubricant supplying step of inserting, before moving at least one of the pipe grasping parts 31 and 32 and the joint-target pipe attachment part 10 in the axial direction in the moving step, the tip end portion of the supply piping part 42 into the lubricant supply port Va formed in the socket cover V to supply, from the reservoir 41 reserving lubricant, the lubricant via the supply piping part 42 to the inner circumferential surface of the rubber seal S attached onto the inner circumferential surface of the socket W2a of the joint-target pipe W2. In the socket cover removing step, the supply piping part 42 is used to remove the socket cover V.

As a result, it is possible to supply lubricant from the supply piping part 42 via the lubricant supply port Va formed in the socket cover V that covers the opening of the socket W2a of the joint-target pipe W2 to the inner circumferential surface of the rubber seal S attached onto the inner circumferential surface of the socket W2a of the joint-target pipe W2. Therefore, it is possible to efficiently perform the joining work between the spigot W1a of the pipe W1 and the socket W2a of the joint-target pipe W2.

Moreover, the socket cover V can be removed from the socket W2a of the joint-target pipe W2 by utilizing the supply piping part 42 of the lubricant supplier 40 that supplies lubricant to the inner circumferential surface of the rubber seal S. Therefore, it is possible to efficiently perform the joining work between the spigot W1a of the pipe W1 and the socket W2a of the joint-target pipe W2.

Furthermore, in the present embodiment, the joint-target pipe attachment part 10, the pipe grasping parts 31 and 32, and the movement part 36 are included in one pipe joining device 1. In the pipe grasping step described above, the grasping device X attached to the tip end of the arm Ma of the work machine M carries the pipe joining device 1 to the joint-target pipe W2 while grasping the pipe joining device 1 to attach the joint-target pipe attachment part 10 to the joint-target pipe W2.

As a result, the joint-target pipe attachment part 10 can be easily attached to the joint-target pipe W2 using the work machine M. Therefore, it is possible to efficiently perform the joining work between the spigot W1a of the pipe W1 and the socket W2a of the joint-target pipe W2.

### (Other Embodiments)

Although embodiments of the present disclosure have been described above, the above-described embodiments are merely examples for carrying out the present disclosure. Therefore, the present disclosure is not limited to the above-described embodiments, and the above-described embodiments can be appropriately modified and implemented without departing from the subject matter of the present disclosure.

In the above embodiments, the attachment member driving part 13 is a hydraulic cylinder, for example. However, the attachment member driving part may be an actuator that can extend and retract, such as a piezoelectric element. The attachment member driving part may have any configuration as long as it is configured to generate a driving force that can switch the pipe attachment parts between the open state and the closed state.

In the above embodiments, the pair of attachment members 11 and 12 is brought into the open state or the closed state by the attachment member driving part 13. This also brings the pair of holding members 21 and 22 in the pipe holder 20 coupled to the pair of attachment members 11 and 12 into the open state or the closed state. However, the pair of attachment members may be brought into the open state or the closed state by bringing the pair of holding members into the open state or the closed state by a driving part.

In the above embodiments, the pair of attachment members 11 and 12 in the joint-target pipe attachment part 10 and the pair of holding members 21 and 22 in the pipe holder 20 are coupled to each other by the coupling parts 15 and 16. However, the pair of attachment members and the pair of holding members may not be coupled to each other. In such a case, driving parts may be provided to the pair of attachment members and the pair of holding members, respectively.

In the above embodiments, the pipe moving mechanism 30 has the pair of pipe grasping parts 31 and 32. However, the pipe moving mechanism may have one pipe grasping part, or three or more pipe grasping parts.

In the above embodiments, each of the pair of pipe grasping parts 31 and 32 is an arc-shaped plate member. However, the pair of pipe grasping parts may have any configuration as long as it is configured to grasp the pipe so as to allow movement in the axial direction.

In the above embodiments, the pair of holding members 21 and 22 in the pipe holder 20 has the pipe contact parts 21a and 22a and the guides 21b and 22b. However, the holding member may not have the guide.

In the above embodiments, the pipe joining device 1 joins the spigot W1a of the pipe W1 and the socket W2a of the joint-target pipe W2 to each other so that the axis L1 of the spigot W1a of the pipe W1 coincides with the axis L2 of the socket W2a of the joint-target pipe W2. However, the pipe joining device may join the spigot of the pipe and the socket of the joint-target pipe to each other so that the axis of the spigot of the pipe intersects with the axis of the socket of the joint-target pipe. That is, the pipe joining device may join the pipe and the joint-target pipe which are in a bent state to each other.

In the above embodiments, the pipe moving mechanism 30 moves the spigot W1a of the pipe W1 to the socket W2a of the joint-target pipe W2. However, the pipe moving mechanism may move the socket of the joint- target pipe relative to the spigot of the pipe. That is, the movement part of the pipe moving mechanism may be moved to draw the joint-target pipe attachment part closer to the pair of grasping parts that grasps the spigot side of the pipe. The pipe moving mechanism only needs to be configured to allow movement of at least one of the spigot of the pipe and the socket of the joint-target pipe.

In the above embodiments, the pipe joining device 1 has the pipe holder 20 that holds the pipe W1. However, the pipe joining device may not have the pipe holder. In such a case, the pipe joining device may positionally adjust the axis of the spigot of the pipe relative to the axis of the socket of the joint-target pipe by the pipe grasping parts or the like.

In the above embodiments, the pipe joining device 1 has the lubricant supplier 40. However, the pipe joining device may not have a lubricant supply device.

In the above embodiments, the lubricant supplier 40 has the supply piping part 42 whose tip end is inserted into the lubricant supply port Va of the socket cover V. However, the lubricant supplier may use a configuration other than the supply pipe to supply lubricant onto the inner circumferential surface of the rubber seal disposed over the inner surface of the socket of the joint-target pipe.

In the above embodiments, the supply piping part 42 of the lubricant supplier 40 removes the socket cover V from the socket W2a of the joint-target pipe W2. However, the supply piping part may not have the function of removing the socket cover. The pipe joining device may separately have a socket cover remover for removing the socket cover.

In the above embodiments, with the spigot W1a side of the pipe W1 being grasped by the pair of pipe grasping parts 31 and 32, lubricant is supplied by the lubricant supplier 40 onto the inner circumferential surface of the rubber seal S in the socket W 2a of the joint-target pipe W2. However, the timing of supplying lubricant by the lubricant supplier onto the inner circumferential surface of the rubber seal in the socket of the joint-target pipe may be any timing as long as the spigot of the pipe and the socket of the joint-target pipe have not been joined to each other.

In the above embodiments, as for the timing of holding the pipe W1 by the pipe holder 20 and the timing of grasping the spigot W1a side of the pipe W1 by the pair of pipe grasping parts 31 and 32, either timing may be earlier or the timings may be the same.

In the above embodiments, before the pipe W is held by the pipe holder 20, the pipe W is supported by the plurality of supports T. However, the pipe may be positioned relative to the pipe holder by other devices, or the pipe may be positioned relative to the pipe holder with being suspended by the work machine.

In the above embodiments, the pipe joining device 1 is carried by the work machine M into the trench where the pipe W1 is to be laid, and attached to the joint-target pipe W2. However, the pipe joining device may be carried into the trench with being attached to the spigot of the pipe. Furthermore, the pipe joining device may be attached to each of the socket of the joint-target pipe and the spigot of the pipe. In such a case, the pipe joining device, which is to be attached to the spigot of the pipe, may be carried into the trench with being attached to the spigot of the pipe.

### INDUSTRIAL APPLICABILITY

The present disclosure is applicable to a pipe joining device for joining a spigot of a pipe to a socket of a joint-target pipe to be joined to the pipe.

### REFERENCE SIGNS LIST

- 1: pipe joining device
- 10: joint-target pipe attachment part
- 11, 12: attachment member
- 11a, 12a: pipe attachment part
- 11b, 12b: driving force input part
- 13: attachment member driving part
- 15, 16: coupling part
- 20: pipe holder
- 21, 22: holding member
- 21a, 22a: pipe contact part
- 21b, 22b: guide
- 30: pipe moving mechanism
- 31, 32: pipe grasping part
- 33, 34: connector
- 36: movement part
- 37, 38: axial movement part
- 39: movement support
- 40: lubricant supplier
- 41: reservoir
- 42: supply piping part
- 43: support member
- W1: pipe
- W1a: spigot
- W1b: straight pipe portion
- W1c: spigot protrusion
- W2: joint-target pipe
- W2a: socket
- W2b: straight pipe portion
- V: socket cover
- Va: lubricant supply port
- Vb: lubricant supply path
- V1: socket cover body
- V1a: tapered portion
- V2: socket cover insertion portion
- S: rubber seal (seal member)
- Sa, Sb: lubricant seal
- M: work machine
- Ma: arm
- X: grasping device
- T: support
- L1, L2: axis

## Claims

1. A pipe joining device for joining a spigot of a pipe having the spigot and a socket to a socket of a joint-target pipe to be joined to the pipe, the pipe joining device comprising:
a joint-target pipe attachment part to be attached to a socket side of the joint-target pipe;
pipe grasping parts configured to grasp a spigot side of the pipe; and
a movement part configured to move at least one of the joint-target pipe attachment part and the pipe grasping parts in an axial direction so as to join the spigot of the pipe and the socket of the joint-target pipe to each other in the axial direction.

2. The pipe joining device according to claim 1, further comprising
a pipe holder that is coupled to the joint-target pipe attachment part and is configured to hold the spigot side of the pipe with an axis of the spigot of the pipe being positionally adjusted relative to an axis of the socket of the joint-target pipe so as to allow the spigot of the pipe and the socket of the joint-target pipe to be joined to each other.

3. The pipe joining device according to claim 2, wherein
the joint-target pipe attachment part includes a pair of attachment members configured to sandwich the joint-target pipe,
the pipe holder includes a pair of holding members configured to sandwich the pipe,
one of the pair of attachment members is coupled to one of the pair of holding members,
another one of the pair of attachment members is coupled to another one of the pair of holding members, and
the pair of attachment members and the pair of holding members are configured to be switchable between a closed state in which the pair of attachment members sandwiches the joint-target pipe and the pair of holding members sandwiches the pipe and an open state in which the pair of attachment members is away from the joint-target pipe and the pair of holding members is away from the pipe.

4. The pipe joining device according to claim 1, wherein
the movement part moves the pipe grasping parts so as to draw the pipe grasping parts closer to the joint-target pipe attachment part in the axial direction.

5. The pipe joining device according to claim 4, wherein
the pipe grasping parts
each have a thickness equal to or smaller than a protruding height of a spigot protrusion located at a spigot tip end of the pipe, come into close contact with an outer circumferential surface of the pipe on the spigot side, and engage with the spigot protrusion.

6. The pipe joining device according to claim 1, further comprising
a lubricant supplier configured to supply lubricant to an inner circumferential surface of a seal member attached onto an inner circumferential surface of the socket of the joint-target pipe.

7. The pipe joining device according to claim 6, wherein
the lubricant supplier includes
a reservoir in which lubricant is reserved, and
a supply piping part whose tip end portion is insertable into a hole for supplying lubricant formed in a socket cover configured to cover an opening of the socket of the joint-target pipe and that allows the lubricant to be supplied from the reservoir into the hole.

8. The pipe joining device according to claim 7, wherein
the lubricant supplier further includes
a support member configured to support the supply piping part so as to allow rotation about a base end portion of the supply piping part, and
the supply piping part is configured to rotate about the base end portion with the tip end portion being inserted into the hole of the socket cover to allow the socket cover to be removed from the socket of the joint-target pipe.

9. The pipe joining device according to claim 1, further comprising
a socket cover remover configured to remove a socket cover configured to cover an opening of the socket from the socket of the joint-target pipe.

10. A method for joining pipes for joining a spigot of a pipe to a socket of a joint-target pipe to be joined to the pipe, the method comprising:
a joint-target pipe attaching step of attaching a joint-target pipe attachment part to a socket side of the joint-target pipe;
a pipe grasping step of grasping, by pipe grasping parts, a spigot side of the pipe; and
a moving step of moving, by a movement part, at least one of the joint-target pipe attachment part and the pipe grasping parts in an axial direction so as to join the spigot of the pipe and the socket of the joint-target pipe to each other in the axial direction.

11. The method for joining pipes according to claim 10, further comprising
a pipe holding step of holding, by a pipe holder, the spigot side of the pipe with an axis of the spigot of the pipe being positionally adjusted relative to an axis of the socket of the joint-target pipe,
wherein, in the moving step, at least one of the joint-target pipe attachment part and the pipe grasping parts is moved in the axial direction by the movement part with the spigot side of the pipe being held in the pipe holding step.

12. The method for joining pipes according to claim 11,
wherein, in the pipe holding step, the pipe is supported by a support whose height is adjustable, and then the height of the support is lowered to hold the spigot side of the pipe by the pipe holder.

13. The method for joining pipes according to claim 10, further comprising
a socket cover removing step of removing a socket cover configured to cover an opening of the socket of the joint-target pipe.

14. The method for joining pipes according to claim 13, further comprising
a lubricant supplying step of inserting, before moving at least one of the joint-target pipe attachment part and the pipe grasping parts in the axial direction in the moving step, a tip end portion of a supply piping part into a hole for supplying lubricant formed in the socket cover to supply, from a reservoir reserving the lubricant, the lubricant via the supply piping part to an inner circumferential surface of a seal member attached onto an inner circumferential surface of the socket of the joint-target pipe,
wherein, in the socket cover removing step, the supply piping part is used to remove the socket cover.

15. The method for joining pipes according to claim 10,
wherein the joint-target pipe attachment part, the pipe grasping parts, and the movement part are included in one pipe joining device, and
in the pipe grasping step, a grasping device attached to a tip end of an arm of a work machine carries the pipe joining device to the joint-target pipe while grasping the pipe joining device to attach the joint-target pipe attachment part to the joint-target pipe.
